# EUROPEAN PATENT SPECIFICATION

(11) **EP 3 299 743 B1**
(45) Date of publication and mention of the grant of the patent: **26.02.2020**
(21) Application number: 16190501.3
(22) Date of filing: 23.09.2016
(51) Int. Cl.: F24H 3/04, B60H 1/22, F24H 9/18

(54) **ELECTRIC HEATER**
ELEKTRISCHER HEIZER
CHAUFFAGE ÉLECTRIQUE

(43) Date of publication of application: 28.03.2018
(73) Proprietor: Mahle International GmbH, 70376 Stuttgart (DE)
(72) Inventor: Miss, Pascal, 67600 Sélestat (FR); Trussell, Gary, 67230 Westhouse (FR)
(74) Representative: Grauel, Andreas

(56) References cited:
- EP-A1- 2 299 200
- EP-A1- 2 407 327
- EP-A1- 2 608 633
- EP-A1- 2 966 934
- KR-B1- 100 759 533

## Description

### Field of the invention

The invention relates to an electric heater, in particular for a heating or an air-conditioning system of a motor vehicle, with a heating block comprising a plurality of electric heating elements and comprising a plurality of radiator elements, the electric heater having an electric control element which is electrically connected to the electric heating elements, wherein the heating block comprises an air inlet side and an air outlet side, wherein the air inlet side comprises a heat sink, wherein the heat sink and the electric control element are thermally coupled, wherein the heating block comprises an encompassing frame element.

### Description of the related art

Electric heaters are well known in the art especially for the use as an auxiliary heater in a heating or an air-conditioning system of a motor vehicle. The electric heater is used for example to heat up a main air flow generated by a fan of the heating or the air-conditioning system. Such electric heaters often comprise a plurality of electric heating elements which are controlled by an electric control element and which are arranged together with a plurality of heat dissipating radiator elements as a heating block. The heating block is usually arranged together with a frame element which is encompassing the heating block. The electric control element comprises electronic components, for example a circuit board with transistors as power switches. Electric impedances of the electronic components of the electric control element generate heat which has to be dissipated in order to protect the electric control element.

Heat sinks are commonly used to dissipate heat from such electric control elements. However, the use of heatsinks is problematic because they act as a flow resistance against the main air flow. The heat sink thereby reduces the efficiency of the heating or the air-conditioning system.

Document KR 10 2010 011 2035 A discloses an electric heater for a motor vehicle having an electric control element. A way to dissipate heat from the electronic control element is provided by forming cooling pins in one side of the housing of the control element.

Document KR 100759533 B1 discloses a pre-heater mounted with a cover for a motor vehicle with a positive terminal and a negative terminal. An assembly of heat dissipating fins is arranged between the positive terminal and the negative terminal.

Document DE 101 02 671 C2 discloses an electric heater for motor vehicles with the following characteristics: the heating system has several electric heating elements; an electric control element is provided for controlling the power generated by the heating elements; the electric control element comprises several power switches, which are arranged on a supporting plate; the supporting plate is connected by the side facing away from the power switches to a metal plate by means of a material connection, said metal plate is connected to ground potential; the metal plate is electrically insulated from conductor strips, which are located on the lower side of the supporting plate; the heat sinks are provided outside of the housing; thermally conductive connectors connect the metal plate inside the housing to the heat sink outside of the housing.

Document EP 2 966 934 A1 discloses an electric air heater with cooling arrangements according to the preamble of claim 1.

### Object of the invention, solution, advantages

Therefore it is the object of the invention to provide an electric heater which allows to dissipate heat from an electric control element of the electric heater without efficiency losses of the heating or the air-conditioning system.

The object is achieved by the features of claim 1.

According to an embodiment of the invention an electric heater is provided, in particular for a heating or an air-conditioning system of a motor vehicle, with a heating block comprising a plurality of electric heating elements and comprising a plurality of radiator elements, the electric heater having an electric control element which is electrically connected to the electric heating elements, wherein the heating block comprises an air inlet side and an air outlet side, wherein the air inlet side comprises a heat sink, wherein the heat sink and the electric control element are thermally coupled, wherein the heating block comprises an encompassing frame element, wherein the encompassing frame element comprises at least one through opening which is arranged adjacent to the at least one heat sink. The heat sink takes up heat from the electronic components of the electric control element. The main air flow generated by the fan of the heating or the air-conditioning system impacts perpendicularly to the air inlet side on the heating block and takes up heat from the electric heating elements while it flows through the heating block. A portion of the main air flow impacts on a first face side of the heat sink, takes up heat from the heat sink and flows substantially parallel to the first face side of the heat sink to the at least one through opening. After flowing through the at least one through opening the portion of the main air flow merges again with the main air flow. Thereby the heat sink dissipates the heat taken up from the electronic components of the electric control element to the main air flow. According to the invention two through openings or more are provided.

According to a further advantageous embodiment of the invention, the at least one heat sink comprises a first end and a second end opposite the first end, wherein the encompassing frame element comprises a first through opening and a second through opening, wherein the first through opening is arranged adjacent to the first end and the second through opening is arranged adjacent to the second end of the heat sink.

In a further embodiment, the at least one through opening comprises an opening surface, wherein the opening surface is arranged substantially perpendicular to the direction of an air flow.

It is preferable, if at least one of the electric heating elements comprises at least one PTC element.

Additionally the at least one heat sink comprises a first longitudinal side and a second longitudinal side opposite the first longitudinal side, wherein the second longitudinal side comprises a plurality of recesses.

In a further embodiment, at least one of the recesses and a portion of at least one radiator element are substantially arranged aligned with each other.

Furthermore it is preferable, that the second longitudinal side of the at least one heat sink comprises a plurality of ridges, wherein at least one of the ridges and a portion of at least one of the electric heating elements are substantially arranged aligned with each other. Thereby the heat sink can dissipate more heat to the air flow.

In a further embodiment it is favorable, that the air inlet side of the heating block comprises a first cover grille and the air outlet side of the heating block comprises a second cover grille, wherein the heat sink is connected to an outer side of the first cover grille. The first cover grille and the second cover grille serve as a protection element against a direct contact to the electric heating elements, for example during a service.

In another embodiment it is favorable, that the encompassing frame element comprises a first short side, wherein the first short side comprises an insertion opening, wherein the heating block is inserted into the insertion opening and the electric control element is connected to the first short side. The insertion opening allows an easy assembling of the electric heater.

Furthermore it is advantageous, that the heating block comprises at least one plug-in foot which can be inserted into a corresponding recess comprised by the encompassing frame element. The plug-in foot can be used as a mounting aid.

According to a further aspect of the invention, the first short side of the encompassing frame element comprises at least one first connecting element and the electric control element comprises at least one second connecting element corresponding to the at least one first connecting element, wherein the at least one first connecting element and the at least one second connecting element are connectable to each other.

In another embodiment of the invention, the first short side of the encompassing frame element comprises flanges, whereby the flanges are connectable to a wall portion of a housing of the heating or the air-conditioning system.

In a further advantageous embodiment, the encompassing frame element comprises a sealing element.

Furthermore it is advantageous, that the heat sink comprises a first face side which is facing away from the heating block, wherein the first face side of the heat sink comprises surface increasing elements.

Further preferable embodiments of the invention are described in the claims and the following description of the drawings.

### Description of the drawings

The invention is explained in detail below by means of an exemplary embodiment and with reference to the drawings, in which:
- Fig.1: shows a first embodiment of an inventive electric heater,
- Fig. 2: shows a sectional view of the electric heater according to Fig. 1,
- Fig. 3: shows the heating block and the electric control element in detail according to Fig. 1,
- Fig. 4: shows a perspective view of the electric heater according to Fig. 1 assembled together with a sealing element, and
- Fig. 5: shows in detail how the electric heater according to Fig. 1 is assembled.

### Preferred embodiments of the invention

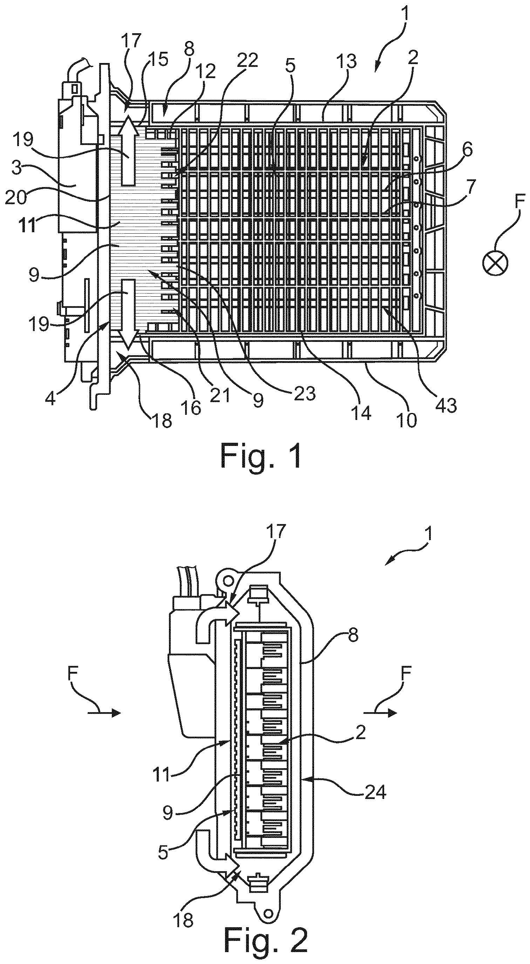

Fig. 1 shows an illustration of an electric heater 1 according to an embodiment of the present invention. The inventive electric heater 1 might be utilised as a main heater or as an auxiliary heater or as a pre-heater in a heating or an air-conditioning system of a motor vehicle. In this case the electric heater 1 heats up a main air flow which is generated by a fan of the heating or the air-conditioning system. The main air flow passes the heat transfer surface of the electric heater 1 in order to take up heat from the heat transfer surface and to supply warm air into the passenger compartment of the motor vehicle.

For this purpose the heating or the air-conditioning system usually comprises a housing which is not illustrated in Fig. 1. The housing comprises air ducts that are formed by walls of the housing. The fan generates a main air flow, wherein the air is sucked from the environment or/and out of the passenger compartment of the motor vehicle and blown through the housing such that the air of the main air flow is subsequently heated up by the electric heater 1. In the direction F of the main air flow after the electric heater 1 the air is directed through ducts and leaves the housing at ejector means to the passenger compartment.

The electric heater 1 shown in Fig. 1 is arranged in the main air duct of the housing of the heating or the air-conditioning system. Structurally, the electric heater 1 comprises a heating block 2. The heating block 2 features a layered structure consisting of a plurality of electric heating elements, which are not shown in Fig. 1, and a plurality of radiator elements, which are not shown in Fig. 1, abutting to the electric heating elements. The number and size of the electric heating elements can vary in different embodiments. The electric heating elements are electrically connected to an electric control element 3 by clipping the electric control element 3 to a first short side 4 of the heating block 2. The electric control element 3 is provided for controlling the power generated by the electric heating elements.

The heating block 2 comprises an air inlet side 5 and an air outlet side opposite the air inlet side 5. The air inlet side 5 provides a first cover grille 6 which covers the electric heating elements and the radiator elements. The air outlet side comprises a second cover grille 7 which covers the electric heating elements and the radiator elements.

The electric heating elements can for example comprise PTC (positive temperature coefficient) elements. PTC elements, for example generated from electrically conductive ceramic materials, are current-conducting and conduct electric current better at low temperatures than at high temperatures. The reason therefor is, that their electrical resistance increases with rising temperature. Therefore the conducted current strength and thus the heating power produced becomes lower with rising temperature. Thus, the electric heating elements can be used to generate heat by applying an electric current to them. The electric current is obtained via the electric control element 3 out of the electric system of the motor vehicle.

The heating block 2 is framed by an encompassing frame element 8 which can for example be made of a synthetic material. In different embodiments, the encompassing frame element 8 can have different sizes according to the construction requirements of the heating or the air-conditioning system.

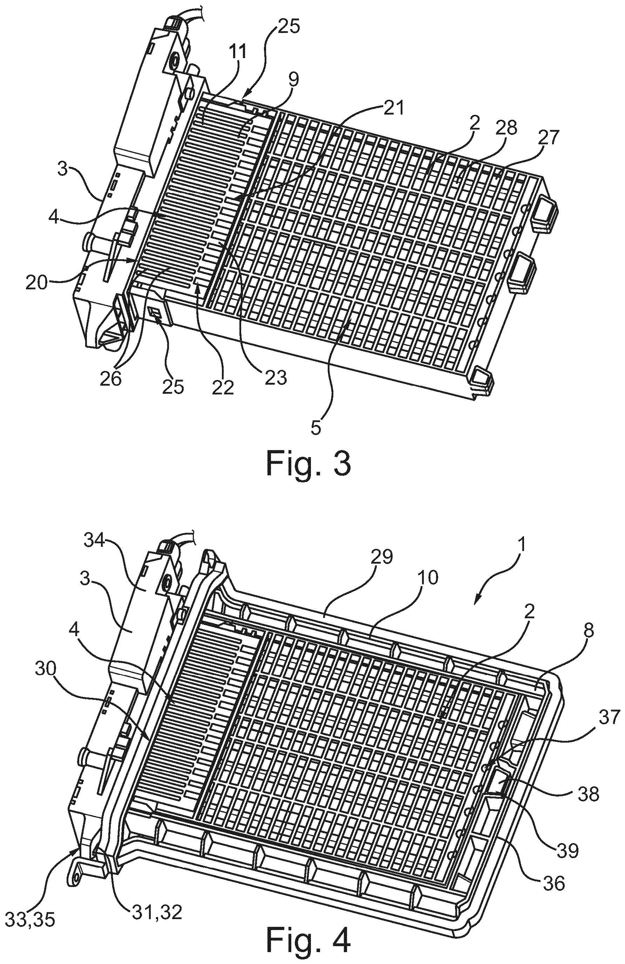

The air inlet side 5 of the heating block 2 comprises a heat sink 9 which is fixed to the outer side 43 of the first cover grille 6. In the embodiment shown in Fig. 1 approximately one fifth of the outer side 43 of the first cover grille 6 is covered by the heat sink 9, wherein the heat sink 9 is positioned next to the first short side 4 of the heating block 2 and adjacent to the electric control element 3. The heat sink 9 comprises a first face side 11 which faces away from the first cover grille 6 in a direction opposite to the direction F of the main air flow. The heat sink 9 is thermally coupled to the electronic components of the electric control element 3, especially the circuit board. In this way the heat sink 9 takes up heat from the electronic components of the electric control element 3. The entire extend of the heating block 2 projects perpendicular to the direction F of the main air flow into an air duct, which is not shown in Fig. 1, of the heating or the air-conditioning system. The outer rim 10 of the encompassing frame element 8 is connected fluid-tightly to the inner wall, which is not shown in Fig. 1, of the air duct. To enhance fluid-tightness and in order to compensate for tolerances a sealing element, see Fig 4, for example made of a plastic foam, is attached to the outer rim 10 of the encompassing frame element 8.

The direction F of the main air flow in the air duct is shown in Fig. 1. The main air flow impacts on the heating block 2 perpendicular to the air inlet side 5 of the heating block 2 and takes up heat from the electric heating elements while it flows through the heating block 2. A portion of the main air flow impacts on the first face side 11 of the heat sink 9. The portion of the main air flow takes up heat from the heat sink 9 and flows parallel to the first face side 11 of the heat sink 9 to the circumferential rim 12 of the heat sink 9. Thereby the heat sink 9 dissipates the heat taken up from the electronic components of the electric control element 3 to the main air flow.

The heating block 2 comprises a first longitudinal side 13 and a second longitudinal side 14 opposite the first longitudinal side 13. The heat sink 9 is arranged on the air inlet side 5 of the heating block 2 and extends between the first longitudinal side 13 and the second longitudinal side 14 of the heating block 2. The heat sink 9 comprises a first end 15 which is arranged adjacent to the first longitudinal side 13 of the heating block 2 and a second end 16 which is arranged adjacent to the second longitudinal side 14 of the heating block 2. The encompassing frame element 8 comprises a first through opening 17 which is piercing the encompassing frame element 8 adjacent to the first end 15 of the heat sink 9. Additionally the encompassing frame element 8 comprises a second trough opening 18 which is piercing the encompassing frame element 8 adjacent to the second end 16 of the heat sink 9. The first through opening 17 and the second through opening 18 each comprise an opening surface which is arranged perpendicular to the direction F of the main air flow. A portion of the main air flow impacts on the first face side 11 of the heat sink 9 and flows off from the heat sink 9 in different directions parallel to the first face side 11 of the heat sink 9. Air which flows off from the heat sink 9 towards the first end 15 of the heat sink 9 can flow through the first through opening 17 of the encompassing frame element 8 and merge with the main air flow that flows off from the air outlet side of the heating block 2. Air which flows off from the heat sink 9 towards the second end 16 of the heat sink 9 can flow through the second through opening 18 of the encompassing frame element 8 and merge with the main air flow that flows off from the air outlet side of the heating block 2. The arrows 19 show how a portion of the main air flow flows parallel to the first face side 11 of the heat sink 9 towards the first through opening 17 and the second through opening 18. Thereby the heat taken up from the electronic components of the electric control element 3 is dissipated to the main air flow which is additionally heated up by the electric heating elements. Thus, the heat taken up from the electronic components of the electric control element 3 can be used to warm up the passenger compartment of the motor vehicle and the output yield of the heating process is enhanced.

The heat sink 9 comprises a first longitudinal side 20 arranged adjacent to the first short side 4 of the heating block 2 and a second longitudinal side 21 opposite the first longitudinal side 20. The second longitudinal side 21 of the heat sink 9 comprises a plurality of parallel recesses 22 and a plurality of parallel ridges 23. Each recess 22 has the shape of an elongated rectangle and is flanked by two ridges 23 that also have the shape of elongated rectangles. Each of the recesses 22 is arranged aligned with a portion of one of the radiator elements. Each of the ridges 23 is arranged aligned with a portion of one of the electric heating elements.

Fig. 2 shows a sectional view of the electric heater 1 according to Fig. 1. The cutting path used for Fig. 2 runs parallel to the direction F of the air flow.

A portion of the main air flow impacts on the first face side 11 of the heat sink 9 which is provided by the air inlet side 5 of the heating block 2, flows partly to the first through opening 17 and the second through opening 18 that are provided by the encompassing frame element 8, subsequently flows through the first through opening 17 and the second through opening 18 and merges with the main air flow which flows off from the air outlet side 24 of the heating block 2.

Fig. 3 shows a perspective view of the heating block 2 assembled together with the electric control element 3. The electric control element 3 is connected to the heating block 2 by clip connections 25. The heat sink 9 is provided by the air inlet side 5 of the heating block 2. The heat sink 9 comprises a first face side 11 which comprises a plurality of surface increasing elements 26. The surface increasing elements 26 enhance the heat transfer from the heat sink 9 to the portion of the main air flow which impacts on the first face side 11 of the heat sink 9.

The heat sink 9 comprises a first longitudinal side 20 arranged adjacent to the first short side 4 of the heating block 2 and a second longitudinal side 21 opposite the first longitudinal side 20. The second longitudinal side 21 of the heat sink 9 comprises a plurality of parallel recesses 22 and a plurality of parallel ridges 23. Each recess 22 has the shape of an elongated rectangle and is flanked by two ridges 23 that also have the shape of elongated rectangles. Each of the recesses 22 is arranged aligned with a portion of at least one of the radiator elements 27. Each of the ridges 23 is arranged aligned with a portion of at least one of the electric heating elements 28.

Fig. 4 shows a perspective view of the assembled electric heater 1 comprising the electric control element 3, the heating block 2 and the encompassing frame element 8. The outer rim 10 of the encompassing frame element 8 is connected fluid-tightly to an inner wall of an air duct of the heating or the air-conditioning system. To enhance fluid-tightness and in order to compensate for tolerances a sealing element 29, which is made of a plastic foam, is attached to the outer rim 10 of the encompassing frame element 8.

The encompassing frame element 8 comprises a first short side 30 which is facing towards the electric control element 3. The first short side 30 of the encompassing frame element 8 comprises first connecting elements 31 which are designed as plug-in lugs 32. The plug-in lugs 32 are corresponding to second connecting elements 33 comprised by the housing 34 of the electric control element 3. The second connecting elements 33 are therefor designed as eyelets 35 that accommodate the plug-in lugs 32.

The encompassing frame element 8 comprises a second short side 36 opposite the first short side 30 of the encompassing frame element 8. The heating block 2 comprises a second short side 37 opposite the first short side 4 of the heating block 2. The second short side 37 of the heating block 2 comprises a number of plug-in foots 38 that are inserted into corresponding recesses 39 comprised by the second short side 36 of the encompassing frame element 8. The plug-in foots 38 and the recesses 39 are used as mounting aids during the assembly of the electric heater 1.

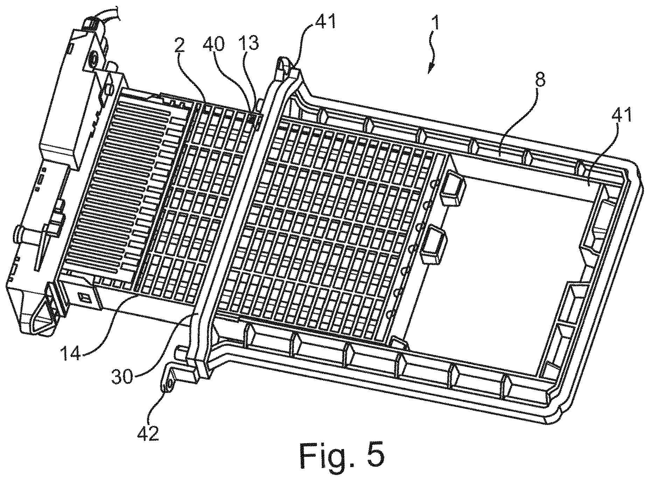

Fig. 5 shows how the embodiment of the electric heater 1 is assembled by inserting the heating block 2 into an insertion opening 40 comprised by the first short side 30 of the encompassing frame element 8. The inner rim 41 of the encompassing frame element 8 is thereby used as a sliding guide. The inner rim 41 and the longitudinal sides 13, 14 of the heating block 2 can comprise guiding elements, which are not shown in Fig. 5, for example overlapping ridges, that ensure the correct and easy insertion of the heating block 2 into the encompassing frame element 8.

The first short side 30 of the encompassing frame element 8 comprises flanges 42 that can be fixed to a wall of a housing of the heating or the air-conditioning system.

## Claims

1. Electric heater (1), in particular for a heating or an air-conditioning system of a motor vehicle, with a heating block (2) comprising a plurality of electric heating elements (28) and a plurality of radiator elements (27), the electric heater having an electric control element (3) which is electrically connected to the electric heating elements (28), wherein the heating block (2) comprises an air inlet side (5) and an air outlet side (24), wherein the air inlet side (5) comprises a heat sink (9), wherein the heat sink (9) and the electric control element (3) are thermally coupled, wherein the heating block (2) comprises an encompassing frame element (8), **characterised in that** the encompassing frame element (8) comprises at least one through opening (17, 18) which is arranged adjacent to the at least one heat sink (9) and wherein the heating block (2) comprises a first longitudinal side (13) and a second longitudinal side (14) opposite the first longitudinal side (13), the heat sink (9) is arranged on the air inlet side (5) of the heating block (2) and extends between the first longitudinal side (13) and the second longitudinal side (14) of the heating block (2), the heat sink (9) comprises a first end (15) which is arranged adjacent to the first longitudinal side (13) of the heating block (2) and a second end (16) which is arranged adjacent to the second longitudinal side (14) of the heating block (2), the encompassing frame element (8) comprises a first through opening (17) which is piercing the encompassing frame element (8) adjacent to the first end (15) of the heat sink (9) and the encompassing frame element (8) comprises a second through opening (18) which is piercing the encompassing frame element (8) adjacent to the second end (16) of the heat sink (9).

2. Electric heater (1) according to claim 1, **characterised in that** the at least one through opening (17, 18) comprises an opening surface, wherein the opening surface is arranged substantially perpendicular to the direction F of an air flow.

3. Electric heater (1) according to claim 1 or 2, **characterised in that** at least one of the electric heating elements (28) comprises at least one PTC element.

4. Electric heater (1) according to claim 1, 2 or 3, **characterised in that** the at least one heat sink (9) comprises a first longitudinal side (20) and a second longitudinal side (21) opposite the first longitudinal side (20), wherein the second longitudinal side (21) comprises a plurality of recesses (22).

5. Electric heater (1) according to claim 4, **characterised in that** at least one of the recesses (22) and a portion of at least one of the radiator elements (27) are substantially arranged aligned with each other.

6. Electric heater (1) according to claim 4 or 5, **characterised in that** the second longitudinal side (21) of the at least one heat sink (9) comprises a plurality of ridges (23), wherein at least one of the ridges (23) and a portion of at least one of the electric heating elements (28) are substantially arranged aligned with each other.

7. Electric heater (1) according to one of the previous claims, **characterised in that** the air inlet side (5) of the heating block (2) comprises a first cover grille (6) and the air outlet side (24) of the heating block (2) comprises a second cover grille (7), wherein the heat sink (9) is connected to an outer side (43) of the first cover grille (6).

8. Electric heater (1) according to one of the previous claims, **characterised in that** the encompassing frame element (8) comprises a first short side (30), wherein the first short side (30) comprises an insertion opening (40), wherein the heating block (2) is inserted into the insertion opening (40) and the electric control element (3) is connected to the first short side (30) of the encompassing frame element (8).

9. Electric heater (1) according to one of the previous claims, **characterised in that** the heating block (2) comprises at least one plug-in foot (38) which can be inserted into a corresponding recess (39) comprised by the encompassing frame element (8).

10. Electric heater (1) according to claim 8 or 9, **characterised in that** the first short side (30) of the encompassing frame element (8) comprises at least one first connecting element (31) and the electric control element (3) comprises at least one second connecting element (33) corresponding to the at least one first connecting element (31), wherein the at least one first connecting element (31) and the at least one second connecting element (33) are connectable to each other.

11. Electric heater (1) according to claim 8, 9 or 10, **characterised in that** the first short side (30) of the encompassing frame element (8) comprises flanges (42), wherein the flanges (42) are connectable to a wall portion of a housing of the heating or the air-conditioning system.

12. Electric heater (1) according to one of the previous claims, **characterised in that** the encompassing frame element (8) comprises a sealing element (29).

13. Electric heater (1) according to one of the previous claims, **characterised in that** the heat sink (9) comprises a first face side (11) which is facing away from the heating block (2), wherein the first face side (11) of the heat sink (9) comprises surface increasing elements (26).

## Patentansprüche

1. Elektrische Heizung (1), insbesondere für ein Heiz- oder ein Klimatisierungssystem eines Kraftfahrzeugs, mit einem Heizblock (2), der eine Vielzahl von elektrischen Heizelementen (28) und eine Vielzahl von Strahlerelementen (27) umfasst, wobei die elektrische Heizung ein elektrisches Steuerelement (3) aufweist, das elektrisch mit den elektrischen Heizelementen (28) verbunden ist, wobei der Heizblock (2) eine Lufteinlassseite (5) und eine Luftauslassseite (24) umfasst, wobei die Lufteinlassseite (5) eine Wärmesenke (9) umfasst, wobei die Wärmesenke (9) und das elektrische Steuerelement (3) thermisch gekoppelt sind, wobei der Heizblock (2) ein einschließendes Rahmenelement (8) umfasst, **dadurch gekennzeichnet, dass** das einschließende Rahmenelement (8) zumindest eine Durchgangsöffnung (17, 18) umfasst, die benachbart zu der zumindest einen Wärmesenke (9) angeordnet ist, und wobei der Heizblock (2) eine erste Längsseite (13) und eine zweite Längsseite (14) gegenüber der ersten Längsseite (13) umfasst, wobei die Wärmesenke (9) auf der Lufteinlassseite (5) des Heizblocks (2) angeordnet ist und sich zwischen der ersten Längsseite (13) und der zweiten Längsseite (14) des Heizblocks (2) erstreckt, wobei die Wärmesenke (9) ein erstes Ende (15), das benachbart zu der ersten Längsseite (13) des Heizblocks (2) angeordnet ist, und ein zweites Ende (16) umfasst, das benachbart zu der zweiten Längsseite (14) des Heizblocks (2) angeordnet ist, wobei das einschließende Rahmenelement (8) eine erste Durchgangsöffnung (17) umfasst, die das einschließende Rahmenelement (8) benachbart zu dem ersten Ende (15) der Wärmesenke (9) durchbohrt, und wobei das einschließende Rahmenelement (8) eine zweite Durchgangsöffnung (18) umfasst, die das einschließende Rahmenelement (8) benachbart zu dem zweiten Ende (16) der Wärmesenke (9) durchbohrt.

2. Elektrische Heizung (1) nach Anspruch 1, **dadurch gekennzeichnet, dass** die zumindest eine Durchgangsöffnung (17, 18) eine Öffnungsfläche umfasst, wobei die Öffnungsfläche im Wesentlichen senkrecht zu der Richtung F eines Luftstroms angeordnet ist.

3. Elektrische Heizung (1) nach Anspruch 1 oder 2, **dadurch gekennzeichnet, dass** zumindest eines der elektrischen Heizelemente (28) zumindest ein PTC-Element umfasst.

4. Elektrische Heizung (1) nach Anspruch 1, 2 oder 3, **dadurch gekennzeichnet, dass** die zumindest eine Wärmesenke (9) eine erste Längsseite (20) und eine zweite Längsseite (21) gegenüber der ersten Längsseite (20) umfasst, wobei die zweite Längsseite (21) eine Vielzahl von Aussparungen (22) umfasst.

5. Elektrische Heizung (1) nach Anspruch 4, **dadurch gekennzeichnet, dass** zumindest eine der Aussparungen (22) und ein Abschnitt von zumindest einem der Strahlerelemente (27) im Wesentlichen aufeinander ausgerichtet angeordnet sind.

6. Elektrische Heizung (1) nach Anspruch 4 oder 5, **dadurch gekennzeichnet, dass** die zweite Längsseite (21) der zumindest einen Wärmesenke (9) eine Vielzahl von Rippen (23) umfasst, wobei zumindest eine der Rippen (23) und ein Abschnitt von zumindest einem der elektrischen Heizelemente (28) im Wesentlichen aufeinander ausgerichtet angeordnet sind.

7. Elektrische Heizung (1) nach einem der vorhergehenden Ansprüche, **dadurch gekennzeichnet, dass** die Lufteinlassseite (5) des Heizblocks (2) ein erstes Abdeckgitter (6) umfasst und die Luftauslassseite (24) des Heizblocks (2) ein zweites Abdeckgitter (7) umfasst, wobei die Wärmesenke (9) mit einer Außenseite (43) des ersten Abdeckgitters (6) verbunden ist.

8. Elektrische Heizung (1) nach einem der vorhergehenden Ansprüche, **dadurch gekennzeichnet, dass** das einschließende Rahmenelement (8) eine erste kurze Seite (30) umfasst, wobei die erste kurze Seite (30) eine Einfügeöffnung (40) umfasst, wobei der Heizblock (2) in die Einfügeöffnung (40) eingefügt ist und das elektrische Steuerelement (3) mit der ersten kurzen Seite (30) des einschließenden Rahmenelements (8) verbunden ist.

9. Elektrische Heizung (1) nach einem der vorhergehenden Ansprüche, **dadurch gekennzeichnet, dass** der Heizblock (2) zumindest einen Einsteckfuß (38) umfasst, der in eine entsprechende Aussparung (39) eingefügt werden kann, die von dem einschließenden Rahmenelement (8) umfasst ist.

10. Elektrische Heizung (1) nach Anspruch 8 oder 9, **dadurch gekennzeichnet, dass** die erste kurze Seite (30) des einschließenden Rahmenelements (8) zumindest ein erstes Verbindungselement (31) umfasst und das elektrische Steuerelement (3) zumindest ein zweites Verbindungselement (33) entsprechend dem zumindest einen ersten Verbindungselement (31) umfasst, wobei das zumindest eine erste Verbindungselement (31) und das zumindest eine zweite Verbindungselement (33) miteinander verbunden werden können.

11. Elektrische Heizung (1) nach Anspruch 8, 9 oder 10, **dadurch gekennzeichnet, dass** die erste kurze Seite (30) des einschließenden Rahmenelements (8) Flansche (42) umfasst, wobei die Flansche (42) mit einem Wandabschnitt eines Gehäuses des Heiz- oder des Klimatisierungssystems verbunden werden können.

12. Elektrische Heizung (1) nach einem der vorhergehenden Ansprüche, **dadurch gekennzeichnet, dass** das einschließende Rahmenelement (8) ein Dichtungselement (29) umfasst.

13. Elektrische Heizung (1) nach einem der vorhergehenden Ansprüche, **dadurch gekennzeichnet, dass** die Wärmesenke (9) eine erste Flächenseite (11) umfasst, die dem Heizblock (2) abgewandt ist, wobei die erste Flächenseite (11) der Wärmesenke (9) Flächenzunahmeelemente (26) umfasst.

## Revendications

1. Appareil de chauffage électrique (1), en particulier pour un système de chauffage ou de climatisation d'un véhicule automobile, ledit appareil de chauffage électrique ayant un bloc chauffant (2) comprenant une pluralité d'éléments chauffants électriques (28) et une pluralité d'éléments de radiateur (27), l'appareil de chauffage électrique ayant un élément de commande électrique (3) qui est électriquement connecté aux éléments chauffants électriques (28), où le bloc chauffant (2) comprend un côté d'entrée d'air (5) et un côté de sortie d'air (24), où le côté d'entrée d'air (5) comprend un dissipateur de chaleur (9), où le dissipateur de chaleur (9) et l'élément de commande électrique (3) sont thermiquement couplés, où le bloc chauffant (2) comprend un élément de cadre enveloppant (8), **caractérisé en ce que** l'élément de cadre enveloppant (8) comprend au moins une ouverture de passage (17, 18) qui est agencée en étant adjacente au dissipateur de chaleur (9) au moins au nombre de un et où le bloc chauffant (2) comprend un premier côté longitudinal (13) et un second côté longitudinal (14) placé à l'opposé du premier côté longitudinal (13), le dissipateur de chaleur (9) est agencé sur le côté d'entrée d'air (5) du bloc chauffant (2) et s'étend entre le premier côté longitudinal (13) et le second côté longitudinal (14) du bloc chauffant (2), le dissipateur de chaleur (9) comprend une première extrémité (15) qui est agencée en étant adjacente au premier côté longitudinal (13) du bloc chauffant (2) et comprend une seconde extrémité (16) qui est agencée en étant adjacente au second côté longitudinal (14) du bloc chauffant (2), l'élément de cadre enveloppant (8) comprend une première ouverture de passage (17) qui est percée en traversant l'élément de cadre enveloppant (8), ladite première ouverture de passage étant adjacente à la première extrémité (15) du dissipateur de chaleur (9), et l'élément de cadre enveloppant (8) comprend une seconde ouverture de passage (18) qui est percée en traversant l'élément de cadre enveloppant (8), ladite seconde ouverture de passage étant adjacente à la seconde extrémité (16) du dissipateur de chaleur (9).

2. Appareil de chauffage électrique (1) selon la revendication 1, **caractérisé en ce que** l'ouverture de passage (17, 18) au moins au nombre de un comprend une surface d'ouverture, où la surface d'ouverture est agencée en étant pratiquement perpendiculaire à la direction F d'un flux d'air.

3. Appareil de chauffage électrique (1) selon la revendication 1 ou 2, **caractérisé en ce qu'**au moins l'un des éléments chauffants électriques (28) comprend au moins un élément - CTP - à coefficient de température positif.

4. Appareil de chauffage électrique (1) selon la revendication 1, 2 ou 3, **caractérisé en ce que** le dissipateur de chaleur (9) au moins au nombre de un comprend un premier côté longitudinal (20) et un second côté longitudinal (21) placé à l'opposé du premier côté longitudinal (20), où le second côté longitudinal (21) comprend une pluralité de cavités (22).

5. Appareil de chauffage électrique (1) selon la revendication 4, **caractérisé en ce qu'**au moins l'une des cavités (22) et une portion d'au moins l'un des éléments de radiateur (27) sont agencées en étant pratiquement alignées l'une par rapport à l'autre.

6. Appareil de chauffage électrique (1) selon la revendication 4 ou 5, **caractérisé en ce que** le second côté longitudinal (21) du dissipateur de chaleur (9) au moins au nombre de un comprend une pluralité de stries (23), où au moins l'une des stries (23) et une portion d'au moins l'un des éléments chauffants électriques (28) sont agencées en étant pratiquement alignées l'une par rapport à l'autre.

7. Appareil de chauffage électrique (1) selon l'une quelconque des revendications précédentes, **caractérisé en ce que** le côté d'entrée d'air (5) du bloc chauffant (2) comprend une première grille de protection (6), et le côté de sortie d'air (24) du bloc chauffant (2) comprend une seconde grille de protection (7), où le dissipateur de chaleur (9) est relié à un côté extérieur (43) de la première grille de protection (6).

8. Appareil de chauffage électrique (1) selon l'une quelconque des revendications précédentes, **caractérisé en ce que** l'élément de cadre enveloppant (8) comprend un premier petit côté (30), où le premier petit côté (30) comprend une ouverture d'insertion (40), où le bloc chauffant (2) est inséré dans l'ouverture d'insertion (40), et l'élément de commande électrique (3) est connecté au premier petit côté (30) de l'élément de cadre enveloppant (8).

9. Appareil de chauffage électrique (1) selon l'une quelconque des revendications précédentes, **caractérisé en ce que** le bloc chauffant (2) comprend au moins un pied enfichable (38) qui peut être inséré dans une cavité correspondante (39) entourée par l'élément de cadre enveloppant (8).

10. Appareil de chauffage électrique (1) selon la revendication 8 ou 9, **caractérisé en ce que** le premier petit côté (30) de l'élément de cadre enveloppant (8) comprend au moins un premier élément de connexion (31), et l'élément de commande électrique (3) comprend au moins un deuxième élément de connexion (33) correspondant au premier élément de connexion (31) au moins au nombre de un, où le premier élément de connexion (31) au moins au nombre de un et le deuxième élément de connexion (33) au moins au nombre de un peuvent être connectés l'un à l'autre.

11. Appareil de chauffage électrique (1) selon la revendication 8, 9 ou 10, **caractérisé en ce que** le premier petit côté (30) de l'élément de cadre enveloppant (8) comprend des brides (42), où les brides (42) peuvent être reliées à une portion de paroi d'un carter du système de chauffage ou de climatisation.

12. Appareil de chauffage électrique (1) selon l'une quelconque des revendications précédentes, **caractérisé en ce que** l'élément de cadre enveloppant (8) comprend un élément d'étanchéité (29).

13. Appareil de chauffage électrique (1) selon l'une quelconque des revendications précédentes, **caractérisé en ce que** le dissipateur de chaleur (9) comprend un premier côté (11), situé de face, qui est orienté à l'opposé du bloc chauffant (2), où le premier côté (11) - situé de face - du dissipateur de chaleur (9) comprend des éléments (26) augmentant en surface.
